(19) Europäisches Patentamt
European Patent Office
Office européen des brevets

(11) **EP 2 672 396 A1**

(12) **EUROPEAN PATENT APPLICATION**

(43) Date of publication:
**11.12.2013 Bulletin 2013/50**

(51) Int Cl.:
***G06F 17/30*** (2006.01)     ***G06K 9/00*** (2006.01)

(21) Application number: **12004348.4**

(22) Date of filing: **08.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zürich**
**8092 Zürich (CH)**

(72) Inventors:
• **Leistner, Christian**
  **8010 Zürich (CH)**
• **Gall, Juergen**
  **8057 Zürich (CH)**
• **Yao, Angela**
  **8050 Zürich (CH)**
• **Van Gool, Luc**
  **8057 Zürich (CH)**

(54) **Method for annotating images**

(57)     A method for annotating a set of images by automatically identifying and visually marking objects (2) in the images (1) comprises performing for at least a subset of the set of images the following steps
● for each image, generating (81) one or more object hypotheses defining a region within the image associated with an object class;
● for each image, computing (82) an estimated annotation cost as a measure of the effort for correcting the object hypotheses in the image (1);
● selecting (83) one of the images of the subset on the basis of the annotation cost;
● displaying (84) the selected image, including a visual representation (3) of a subset of the object hypotheses of the selected image, on a graphical user interface (95);
● in an annotation step (85), a user correcting false (positive or negative) hypotheses.

**Fig. 1**

**Description**

The invention relates to the field of digital image analysis and annotation in interaction with a user. It further relates to a method for annotating images and a corresponding computer program and data processing system as described in the preamble of the corresponding independent claims.

Image annotation, also known as image tagging or linguistic indexing, is a process by which a computer system automatically or in interaction with a user assigns metadata in the form of captioning or keywords to a digital image. Metadata can be a label representing an object class (e.g. "car", "human", "white blood cell", etc.) and can be associated with a region in an image comprising the object. Other metadata can be e.g. the total number of occurrences of an object of a particular class in an image. The term "annotation", in the general sense, refers to both manual and automatic annotation, but in the following text mostly refers to manual annotation by a human user.

The demand for annotated image and video data is rapidly growing. Within the computer vision community, successful object detection algorithms are heavily reliant on large amounts of annotated data for training and evaluation. Outside of the community, statistical analysis from either images or video occurs in a variety of fields: Biologists routinely count cells from microscopy images, while urban planners may sit through hours of video footage tabulating the number of pedestrians using a crosswalk.

Object annotation in image and video can be laborious, tedious, and expensive. One alternative for simplifying annotation is active learning. Active learning aims to minimize human effort in annotation by requesting labels (by user annotation) for only a portion of the training data, e.g., data with high label uncertainty or data which can minimize some expected error measure. The usual objective is, given a fixed (human) annotation budget, to train a classifier with maximum accuracy. This paradigm is well-suited for learning from unlabeled data that is readily available, e.g., from Flickr or YouTube, but not for annotation tasks that require a complete set of labels for some fixed data collection, e.g., in medical imaging. Another major limiting factor which prevents active learning algorithms from being used in practice is that the majority of algorithms are "learning"-centered. For example, the queried data is determined only by potential gain for the algorithm, assuming that all queries are equally expensive, even though this has been shown not to be the case. In addition, iterations between queries may be expensive or time consuming, making it unrealistic or impractical for interaction with a user.

Some approaches focus on making the annotation process itself more efficient for the human annotator. In [I], the authors propose a method for categorizing images using binary queries rather than asking annotators to select the category from some predefined list. In [2], the authors predict a tradeoff between the effort required for manually segmenting an image versus the information gain from using the segmented image for training, thereby introducing some human weighted considerations in the query order. Finally, [3] trains object detectors from Flickr images and uses hash-based queries to efficiently select query images. As noted previously, however, this paradigm is not suitable for annotating complete sets of images.

The video annotation system of [4] derives annotations from tracking results, and active learning is used to intelligently query the human annotator for corrections on the tracks. The cost of annotation, i.e., the number of "clicks", is to be minimized, though the system requires a full pass over a track before each correction query. However, depending on the tracker's speed, interaction with a human annotator can become cumbersome.

It is therefore an object of the invention to create a method for annotating images and a corresponding computer program and data processing system of the type mentioned initially, which overcomes the disadvantages mentioned above.

These objects are achieved by a method for annotating images and a computer program and data processing system for annotating images according to the corresponding independent claims.

The method serves for annotating images from a set of still images or frames from a video stream (the frames henceforth also called images) by automatically identifying **objects** in the images and by visually marking the objects in the images. Given such a **set of images** showing objects to be identified, the method comprises performing *for at least a subset* of the set of images, the following steps

■ *for each image of the subset,* a **hypothesis generating unit** generating one or more **object hypotheses,** wherein an object hypothesis defmes a **region** within the image and is associated with an **object class** (in other words, the region, too, is associated with an object class);

■ *for each image of the subset,* computing an estimated **annotation cost,** wherein the annotation cost is a measure of the effort for correcting the object hypotheses in the image, for example, by a human user;

■ selecting one of the *images of the subset* on the basis of the annotation cost;

■ displaying the selected image, including a visual representation of a *subset of the object hypotheses* of the selected image, on a graphical user interface (displayed on a display device);

■ in an annotation (or verification) step, accepting user input specifying, for each of the displayed object hypotheses, whether it is a correct or a false hypothesis; and optionally accepting user input specifying objects shown in the image for which no object hypothesis is displayed.

Basing the selection of the image on the annotation cost reduces the load on the user and speeds up the object identification process.

An object or a region being "associated with" a class may be represented explicitly by associating the object or region with one of several classes, or implicitly, if there is only a single class. In the latter case, there is an implicit association in that the method and system is concerned with only one class of object, and all object hypotheses automatically pertain only to this class. In this case, the class of the object is not stored or represented in the method or system. Alternatively, if several classes of objects can be identified in one image, then the object hypothesis comprises an explicit representation of the (hypothetical or confirmed) class of the object. An image region can be represented by a boundary shape drawn in the image, for example by a bounding box or other shape.

In an embodiment, the method comprises the further step of updating the hypothesis generating unit in accordance with the user input. This improves the object detection for future use of the hypothesis generating unit.

In an embodiment, the method comprises the repeated execution of the steps of

■ removing the selected image from the subset, thereby creating a reduced subset; and,
■ performing the steps described above (from generating object hypotheses to the annotation step) for the reduced subset;

until the annotation step has been performed for the last image.

As a result, one aspect of the method is an incremental learning approach which continually updates an object detector and detection thresholds as a user interactively corrects annotations proposed by the system. The learning approach can be paired with an active learning element which predicts the most "difficult" images, i.e., those with the highest annotation cost. These examples are then corrected by the user for subsequent updates. The result is an "annotator"-centered algorithm, in contrast to existing "learning"-centered active learning algorithms. Optimizations and evaluations are made in terms of human annotation cost.

In an embodiment, the hypothesis generating unit comprises a computer-based implementation of a classification method or device which is designed to classify image data and to be incrementally updated, given annotated image data. This allows for the incremental improvement of the hypothesis generating unit after each object detection and its subsequent correction in the annotation step. The classification method can be considered to be implemented by **a classification unit.**

In an embodiment, the hypothesis generating unit comprises a computer-based implementation of a single decision tree or of a set of decision trees, that is, a decision forest, in particular of a Hough forest.

In an embodiment, the hypothesis generating unit, given image data representing a patch of an image, is designed to return at least an offset vector and a patch score value, wherein the offset vector relates the patch to a fixed point of an object, and the patch score value represents a confidence that the patch is part of an instance of a particular object class. A patch typically is a small part of the image, smaller than an image region associated with an object hypothesis. In other words, an image region typically can comprise a plurality of patches.

In an embodiment, the step of computing an estimated **annotation cost** comprises the steps of

■ for each object hypothesis, given an **object score** which represents a confidence that the region of the image associated with the object hypothesis represents an instance of a particular object class, selecting whether to display a visual representation of the object hypothesis, thereby creating a display set of object hypotheses to be displayed and a non-display set of object hypotheses not to be displayed;
■ computing, for each member of the display set the probability that it is a false positive, and computing, for each member of the non-display set the probability that it is a false negative;
■ computing, from these probabilities, the estimated **annotation cost** as a function of costs for annotating the image by correcting false positives and correcting false negatives.

In other words, the display set typically comprises the hypotheses that - depending on the value of a score associated with the hypotheses in relation to the value of a detection threshold - the object is indeed present in a region, and the non-display set comprises hypotheses for which the value of the score is too low. If a hypothesis in the display set turns out not to comprise an object (or not to comprise an object according to the class of the hypothesis), then the hypothesis will be a false positive. If an object is missed, this will, in the annotation step, be marked as a false negative.

The costs for annotating typically comprise costs, such as time, for inspecting the image and the displayed hypotheses, and for indicating a false positive, e.g. by pointing at or clicking on it, and for indicating a false negative, e.g. by drawing a boundary (rectangle, circle, freeform etc.) around it. The estimated annotation cost is computed e.g. from the expected occurrence of false positives and false negatives, and estimates of the probability of their occurrence.

In an embodiment, in the function of costs, correcting one false positive has a different influence than correcting one false negative, in particular a lower influence. For example, the function is a weighting function in which correcting one false positive carries a different, in particular a lower weight than correcting one false negative. This is, because it is generally easier and faster to simply click on a visual element (representing a false positive) than to draw a boundary or a bounding box around an object (indicating a false negative, i.e. an object that has been missed).

In an embodiment, in the step of selecting whether to display a visual representation of an object hypothesis, the object score is compared to a threshold value, and, depending on whether the object score is smaller or larger than the threshold value, the object hypothesis is assigned to the display set or the non-display set.

In an embodiment, the method comprises the step of performing an optimization procedure adapting the threshold value in order to minimize the estimated annotation cost.

In an embodiment, the step of selecting one of the *images of the subset* on the basis of the annotation cost comprises the steps of

■ displaying, on a user interface, a representation (e.g. of a metric that is indicative) of the annotation cost for each of the images of the subset, or for a subset of the images of the subset; and
■ inputting a user input indicating the selection of one of the images of the subset.

In an embodiment, the step of selecting one of the *images of the subset* on the basis of the annotation cost comprises the steps of

■ *for each image of the subset, or for a subset of the images of the subset,* evaluating the annotation cost by an evaluation function; and
■ selecting one of the images according to the result of the evaluation function.

A computer program product or a computer program for annotating images according to the invention is loadable into an internal memory of a digital computer, and comprises computer program code means to make, when said computer program code means is loaded in the computer, the computer execute the method according to the invention. In a preferred embodiment of the invention, the computer program product comprises a computer readable medium, having the computer program code means recorded thereon. The computer readable medium preferably is non-transitory, that is, tangible. In another preferred embodiment of the invention, the computer program is embodied as a reproducible computer-readable signal, and thus can be transmitted in the form of such a signal. A data processing system is programmed to perform the method according to the invention.

Further preferred embodiments are evident from the dependent patent claims. Features of the method claims may be combined with features of the computer program claims and data processing system claims and vice versa.

The subject matter of the invention will be explained in more detail in the following text with reference to preferred exemplary embodiments which are illustrated in the attached drawings, which schematically show:

Fig. 1     a graphic user interface for annotating images;
Fig. 2     an image with bounding boxes around objects of interest;
Fig. 3     image patches and their possible relation to a fixed point of an object;
Fig. 4     an image with an object and its bounding box, and votes for the object in Hough space;
Fig. 5     an evolution of a classification tree;
Fig. 6     an evolution of false positives and false negatives when annotating a sequence of images;
Fig. 7 (a)     scores (confidence values) for negative hypotheses and positive hypotheses;
Fig. 7 (b)     an evolution of an automatically adapted threshold value for object detection when annotating a sequence of images;
Fig. 8     a flow diagram of the method for annotating images; and
Fig. 9     elements of a system for annotating images.

In principle, identical or functionally identical elements are provided with the same reference symbols in the figures.

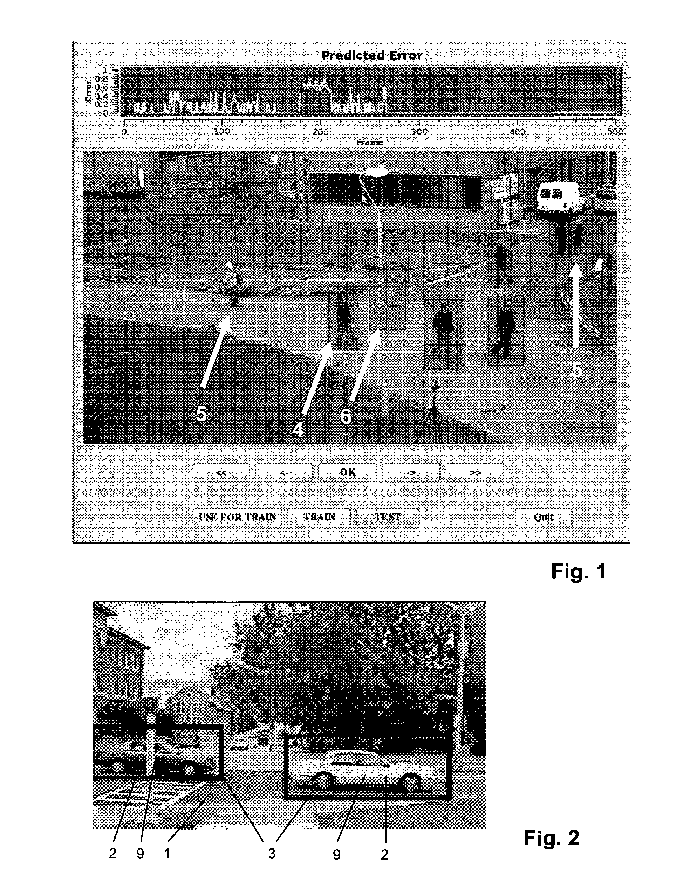

The goal of interactive annotation is to label a fixed set of images with minimal annotation cost for the user. An image can be associated with several labels. Each label can be associated with a region in the image. In the graphic user interface (GUI) setup shown in **Fig. 1**, the user corrects object hypotheses that are generated in the course of the interactive annotation process. Corrected hypotheses are then used to update a detector or classification engine (section on incremental learning) and to determine an optimal detection threshold (sections on annotation cost and threshold estimation). Since the order of processing the images can impact the detector performance, an active learning approach is implemented in order to reduce an overall annotation cost (section on active learning).

4

**Incremental Learning**

**Offline Hough Forests:** A Hough forest [5] detects objects using the generalized Hough transform and randomized decision trees [6]. In theory, any incrementally learned object detector is applicable. Hough forests are extremely fast and efficient for both training and detection, making them particularly suitable for interactive applications. Offline Hough forests are first reviewed, and for a more thorough treatment, [5] is referred to, which is herewith incorporated by reference.

The method begins with bounding-box annotated training data as an initial input. That is, using a GUI input device 95 displaying an image 1, bounding boxes 3 are drawn around objects 2 in the image 1 being annotated and associated with a class of objects. This can be done manually. There can be just a single class of objects 2, which therefore does not have to be represented explicitly. Instead of bounding boxes 3, other boundary shapes such as circles, ellipsoids, freehand shapes etc. can be used. A boundary shape defines an image region associated with the class of objects. For the sake of simplicity, the following description shall refer to bounding boxes only, but it is understood that the method applies to other boundary shapes as well.

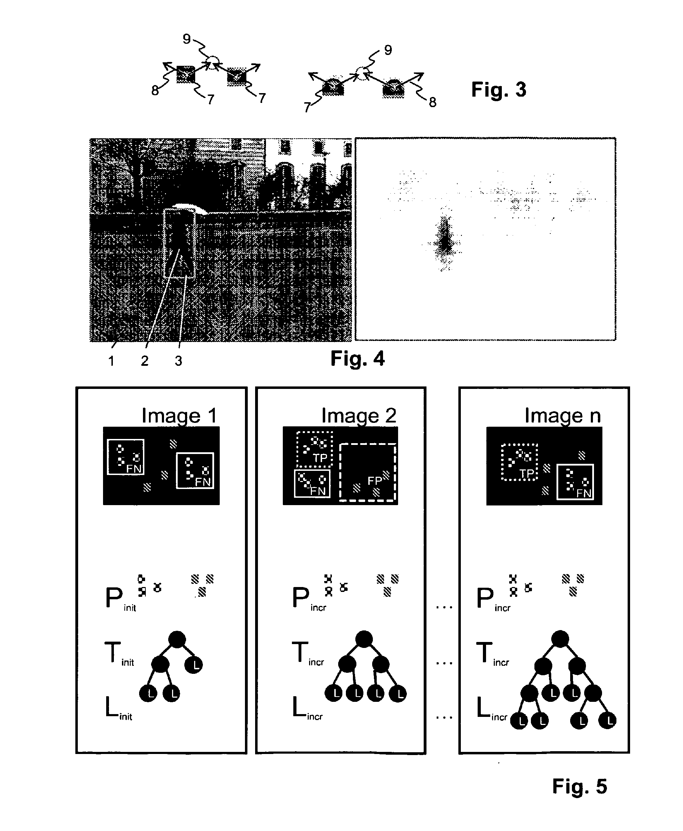

**Figs. 2** to **4** illustrate the basics of the Hough transform based approach in a nutshell: **Fig. 2** shows an image 1 with a scene with bounding boxes 3 around objects 2 to be identified, here: cars seen from the side. **Fig. 3** shows how a particular feature of an object 2 can be used to identify the class of the object 2 and a fixed point of the object 2 (here a center): Each of the wheels could be a front or a back wheel and thus, with a certain probability can be seen to vote for the location of the center of the object 2 being either to the upper right or the upper left of the wheel. If this is repeated for the wheels and other features of the car, the true center 9 of the car will receive most votes. This gives a probabilistic measure for the detection of the car as such and for the location of the centre of the car. In this example, there is only one class of objects 2 (car), in general there can be more classes. Furthermore, for the sake of illustration, the image of an entire wheel is a patch 7 from which the object hypothesis is derived. In actual use of the method, such a patch 7 can be a smaller or larger part of a region of the image 1. **Fig. 4** shows, on the left side, an image 1 with a human figure as the object 2 to be detected, and a bounding box 3 corresponding to a region comprising the object 2. On the right side, the Hough space is shown, representing votes for the location of the object center 9 (increasing darkness at a particular point representing the higher probability for the object center 9 being at that point).

During training, a set of patches $P$ - typically rectangular - is randomly sampled from the bounding-box annotated training data. Each patch $P_i$ is associated with a class label $c_i$ (representing the class as defined in the initial training) and a displacement vector $d_i$ of the patch's center to a fixed point of the training example. If the patch is sampled from within a bounding box or from another shape, then the fixed point can be the center of the box, or another uniquely defined point. Each tree $T$ in the forest is constructed recursively from the root node downwards in the following manner: For each node, a set of binary tests $\{t\}$ are randomly generated which could split the training data $P$ into two subsets $P_L(t)$ and $P_R(t)$. Each binary test selects an image feature and compares, for example, the feature values at two pixel locations in a patch. Features are, for example, brightness, colour, gradients, other values determined by filtering the image, etc. Based on a threshold associated with the test, the patch is added either to the left or right split. The optimal binary test $t^*$ is the one that maximizes the gain according to the objective function

$$\Delta H(t) = H(P) - \sum_{S \in \{L,R\}} \frac{|P_S(t)|}{|P|} H(P_S(t))$$

Depending on the measure $H$ used, a node can either be a classification or regression node. For classification, entropy

$$H(P) = - \sum_{c \in \{neg, pos\}} p(c \mid P) \log p(c \mid P)$$

can be used as objective function, where $p(c|P)$ is given by the percentage of samples with class label $c$ in the set $P$. For regression, the sum-of-squared-differences can be used as an objective function:

$$H(P) = \frac{1}{|\{d_i : c_i = pos\}|} \sum_{d_i : c_i = pos} \left\| d_i - \bar{d} \right\|_2^2$$

where $\bar{d}$ is the mean of the displacement vectors $d_i$ of the positive examples ($c_i=pos$) in the set $P$. After a good split, according to the objective function used, has been found, the binary test $t*$ is stored at the node and the sets $P_L(t*)$ and $P_R(t*)$ are passed to the left and right child node, respectively. Trees grow until some stopping criterion is met. One or more of the following three criteria can be used: maximum tree depth, minimum gain, i.e., $\Delta H(t*) > \varepsilon$, and a minimum number of samples for the sets $P_L(t*)$ and $P_R(t*)$. At the leaf nodes, the patches $P$ arriving at leaf $L$ are removed and only $p(c|L) = p(c|P)$ and the positive offsets $D_L=\{d_i : c_i=pos\}$ are stored.

A forest is generated by repeating the above tree growing process several times. Because of the randomness in choosing patches and binary tests, each tree will be different from the others.

For detection, patches extracted from the test image are passed through all trees in the forest. Depending on the reached leaf $L$, votes are cast, by each of the trees, for object centers 9 according to the stored displacements $D_L$ with a probability proportional to $p(c|L)$. Detections are determined by local maxima in the Hough space that typically parameterizes the position $x$ and the scale $s$ of the object in the image. The bounding box is then, for example, centered at location $x/s$ and has the size $w/s$ x $h/s$, where width $w$ and height $h$ are given by the expected bounding box size at scale $s=1$, for example, determined by the average annotated bounding box at scale $s=1$. **Fig. 4** illustrates the detection with a single scale $s=1$.

**Incremental Hough Forests:** Hough forests are commonly trained offline, using all training samples at the outset. Offline training, however, is not suitable for an annotation task where training and annotation iterate. Therefore the Hough forest is trained incrementally, similar to the on-line learning of [7], with the difference that the patches at the leaves are stored after training. This is illustrated in **Fig. 5** (patches are represented by small checkered or hatched rectangles). Having an image - referred to as a training example from here onwards - initially annotated by the user ("Image 1"), positive patches are sampled from the bounding boxes and negative patches are sampled from the back-ground. Initial trees $T_{init}$ are generated and trained with patches $P_{init}$ as in the offline case. A subsequent image ("Image 2") is processed, in a further training step or annotation step, as follows: Before the user annotates a subsequent image, the initial trees $T_{init}$ of the forest are applied to this subsequent image to generate object hypotheses. The user then only needs to correct wrong hypotheses, i.e., missed detections (FN) and false positives (FP). For example, the former are corrected by drawing a bounding rectangle around an object, the latter are corrected by clicking on the wrongly generated boundary rectangle.

Then, after the annotation step, positive patches are sampled from the true positives and from the corrected false negatives, and negative patches are sampled from corrected false positives and optionally from the background. These newly sampled patches $P_{incr}$ are used to further train the trees. The newly sampled patches $P_{incr}$ are first passed through the initial trees $T_{init}$ and arrive at leaves $L_{init}$. As these new patches arrive at a leaf $L$, an optimal binary test $t*$ that satisfies the splitting criteria is determined. New leaves $L_{iner}$ may be added to the tree. Finally, the class probability $p(c|L)$ and the list of displacement vectors $D_L$ are updated for each leaf.

The procedure is repeated for further subsequent images ("Image n") in further training steps or annotation steps. Since in this manner the number of stored patches would ultimately grow to infinity, the maximum number of patches stored at each node is limited by a limit value. When this limit value is exceeded, then, for example, a subset of the patches is randomly selected for future use, and the others are removed.

In order to achieve the goal of minimising the annotation cost for the set of images, the subsequent image to be annotated has to be chosen appropriately. This can be done by estimating, for each of the remaining images to be annotated (i.e. a subset of an initial set of images) or a random subset thereof, the expected annotation cost, and choosing - manually or automatically - the image based on the expected annotation cost. The annotation cost is reduced by selecting the most useful training images. This is assumed to be equivalent to selecting the most "difficult" images, i.e., those with the highest expected annotation cost. Optionally, a threshold on the maximal allowed annotation cost per image can be used, i.e., the images with the highest expected annotation cost below the threshold are selected.

After each training or annotation step, the estimates are recomputed for the remaining images, and the next image is chosen accordingly. The result is an incremental learning process.

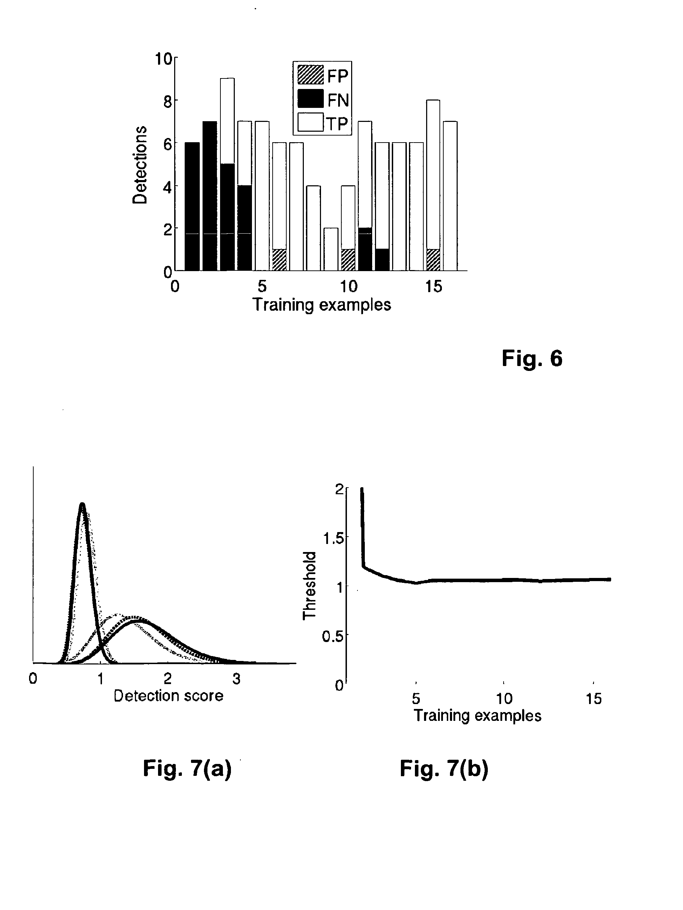

The difference in annotation cost between offline and incremental learning is shown for an example in **Fig. 6**. In this example, the number of training examples is 16. Offline training (i.e. without learning) would require the entirely manual annotation of all existing objects 2 (true positives (TP) and false negatives (FN)). Incremental learning requires only the annotation of the objects 2 that are wrongly detected, that is, false negatives (FN, missed detection of an object) or false positives (FP). This effectively results in the annotation only of objects 2 that are not similar to previously annotated objects 2, which reduces the annotation cost for the user. In this example, after four training examples, most objects 2 are already correctly detected (TP).

**Annotation Cost**

Object detectors like Hough forests provide a score (or confidence value) for each object hypothesis which can then be compared to a threshold value in order to decide whether to accept or reject hypotheses. By defining an annotation cost model when annotating images, one can find the best threshold $\tau *$ that minimizes annotation cost.

The annotation cost can be modelled by

$$f(\tau) = K + f_{FP}(n_{FP}(\tau)) + f_{FN}(n_{FN}(\tau))$$

where $n_{FP}(\tau)$ and $n_{FN}(\tau)$ are the number of false positives and false negatives for a given threshold $\tau$, and $K$ is a constant cost factor. The differential functions $f_{FP}$ and $f_{FN}$ measure the cost for correcting a false positive FP or a false negative FN. Usually, an equal cost is assigned to FPs and FNs, corresponding to, for example, $f_{FP}(x) = f_{FN}(x) = x$. Since the annotation cost $f(\tau)$ can be evaluated only when ground truth is available, the method aims to minimize $f(\tau)$ during incremental learning.

In an embodiment, a linear cost model is used, i.e., $f_{FP}(x) = w_{FP}x$ and $f_{FN}(x) = w_{FN}x$. The values for $w_{FP}$ and $w_{FN}$ can be estimated by a linear regression, using the number of FPs and FNs on each annotated image as regressors and the time required to correct the annotations on each frame as the response variable. Experiments reveal that it takes roughly twice as long to correct a FN versus a FP. When integrating this model into the threshold estimation, it implies that the estimated threshold should be lower than when FPs and FNs have equal cost.

**Threshold Estimation**

**Fig. 7**(a) shows a (probabilistic) distribution of detection scores (or confidence values) for positive (right group of lower peaks) and negative (left group of higher peaks) examples. The distribution of scores can be modelled by Gamma distributions. Distribution parameters are updated after each incremental training step (1,..., 16). Given the distributions for positive and negative examples, the threshold can be selected. Simply stated, if the threshold is moved to the left, then more negative examples will be classified as positives (false positives). If the threshold is moved to the right, then more positive examples will not be classified as positives (false negatives). Where exactly the threshold is to be placed depends on the shape of the distribution and on the relative cost of false negatives and false positives. **Fig. 7** (b) shows the evolution of the threshold for the detection scores, estimated from the distributions, as more training examples are processed. This is now explained in more detail:

As incremental learning iterates between training and testing, one obtains positive and negative hypotheses with the corresponding detection scores, denoted by $S_{pos}$ and $S_{neg}$. Therefore, an optimal threshold $\tau *$ can be estimated, based on $S_{pos}$ and $S_{neg}$. To this end, the distributions of the scores are modelled conditional to a positive or negative hypothesis, denoted by $p(s|pos)$ and $p(s|neg)$. It has been experimentally discovered that the conditional probabilities are well modelled by Gamma distributions:

$$p(s \mid pos) = \Gamma(k_{pos}, \theta_{pos})$$

$$p(s \mid neg) = \Gamma(k_{neg}, \theta_{neg})$$

The parameters $k$ and $\theta$ are estimated by moment estimates from the sets $S_{pos}$ and $S_{neg}$. The estimated probabilities over several training iterations are shown in **Fig. 7** (a). To find an optimal threshold, the problem is expressed as

$$\arg \min_{\tau} f_{FP}(p(FP \mid \tau)) + f_{FN}(p(FN \mid \tau))$$

where $p(FP \mid \tau)$ and $p(FN \mid \tau)$ are the probabilities that a hypothesis is a FP or a FN for a given threshold $\tau$. Based on $p(s \mid pos)$ and $p(s \mid neg)$, one obtains

$$p(FP \mid \tau) = p(neg) \int_{\tau}^{\infty} p(s \mid neg)\, ds$$

$$p(FN \mid \tau) = p(pos) \int_{0}^{\tau} p(s \mid pos)\, ds$$

where $p(pos) = \dfrac{\left|S_{pos}\right|}{\left|S_{neg}\right| + \left|S_{pos}\right|}$ and $p(neg) = 1 - p(pos)$. Since the functions are

differentiable, $\tau^{*}$ can be estimated very efficiently by local optimization using the average of the lowest positive score and the highest negative score as initial threshold. Although the objective can be non-convex, the local optimization is sufficient in practice; see **Fig. 7**(b).

Once new training examples are gathered for training, the parameters of the distributions $p(s \mid pos)$ and $p(s \mid neg)$ are updated. The evolution of the distributions with an increasing number of incremental training steps is shown in **Fig. 7**(a). **Fig. 7** (b) shows the threshold starting very high but stabilizing after a few training iterations. Since the threshold estimation requires at least two training images, the  annotation cost for the first two images is the same as in the offline case, as is evident from **Fig. 6.**

**Active Learning**

Incremental learning processes the images according to a fixed scheme, e.g., according to the order of the images, or by using every $n$th image of a given image or video sequence. In active learning, annotation cost is reduced by selecting the most useful training images. For the present annotation task, this is assumed to be equivalent to selecting the most "difficult" images, i.e., those with the highest annotation cost. Similar to the preceding section on threshold estimation, we can estimate the annotation cost of a given set of hypotheses cost with scores $S$ using

$$f_{pred}(S, \tau) = \sum_{s \in S} f_{FP}(p(FP \mid s, \tau)) + f_{FN}(p(FN \mid s, \tau))$$

where $\tau$ is the estimated threshold. The predicted annotation cost $f_{pred}$ can be computed by

$$P(E \mid s, \tau) = \frac{p(s \mid E, \tau)\, p(E \mid \tau)}{p(s \mid neg)\, p(neg) + p(s \mid pos)\, p(pos)} \quad \text{where } E \in \{FP, FN\} \text{ and}$$

$$p(s \mid FN, \tau) = \begin{cases} 0 & \text{if} \quad s \geq \tau \\[2ex] \dfrac{p(s \mid pos)}{\displaystyle\int_{0}^{\tau} p(s \mid pos)\, ds} & \text{if} \quad s < \tau \end{cases}$$

$$p(s \mid FP, \tau) = \begin{cases} \dfrac{p(s \mid neg)}{\int\limits_{\tau}^{\infty} p(s \mid neg)ds} & if \quad s \geq \tau \\ 0 & if \quad s < \tau \end{cases}$$

Performance of the prediction model has been confirmed by experiments which show that the predicted annotation cost is indeed high for frames or images for which where the real annotation cost turns out to be high.

In the active learning setup, in an embodiment, the predicted annotation cost for a subset or for all of the remaining images that have not yet been annotated is presented to the user in order to characterise them. As illustrated in Fig. 1, the predicted annotation cost can be presented by a graph, showing on the vertical axis the estimated annotation cost over the frame number along the horizontal axis.

The user can then select the images with a high value of the annotation cost.

Alternatively, automatic selection of the next image can be done by ranking all remaining images, or a subset of the remaining images, or a randomly selected subset of the remaining images, and then presenting only the image with the highest annotation cost to the user for annotation (i.e. correction of the hypotheses) by the user.

Returning to Fig. 1, a GUI for annotating a sequence of images or frames is shown, with a central portion displaying the image (For clarity, most reference numerals in Fig. 1 are omitted). The image here comprises bounding boxes representing automatically generated object hypotheses. Since the objects are all of the same class, i.e. human figures, the bounding boxes are not labeled any further. Five of them correspond to correct object hypotheses 4, and one to a false positive 6. Two objects have not been found, thus corresponding to a false negative 5. The GUI further comprises a graph labelled "predicted error", showing on the vertical axis the estimated annotation cost over the frame number along the horizontal axis. This shows, for example, that a number of frames (around sequence number 200) have a large estimated annotation cost. For manual selection of the next image, a user can select one of these frames for the next training step, e.g. by clicking in the graph.

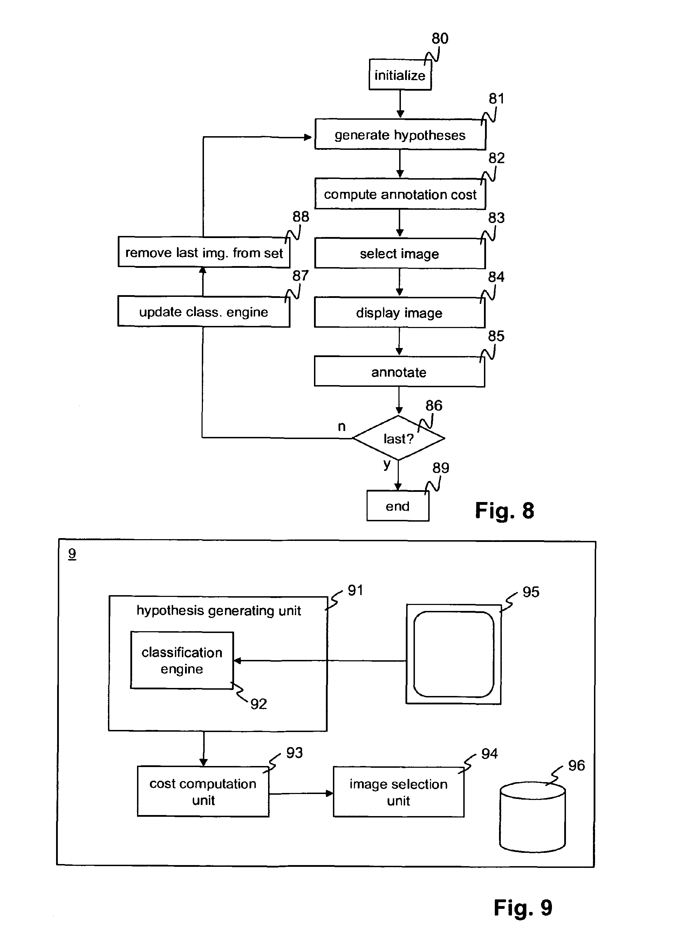

**Fig. 8** shows a flow diagram of the method for annotating images, as applied iteratively to a set of images or frames. **Fig. 9** shows a highly schematic representation of the elements of a programmable data processing system 9 for annotating images. The method steps and elements involved are the following:

■ In an initialization or start step 80, the set of images is acquired, e.g., by retrieving them from a computer memory or data storage unit 96. The images may have been captured with a camera at an earlier time or immediately before annotation. If a trained classification engine 92 for the type of images and objects 2 exists, the classification engine 92 (i.e. a state of the classification engine) can be loaded or initialized according to data retrieved from memory 96 as well. Otherwise, a manual annotation step can be performed and the classification engine 92 be trained, e.g. by building a classification tree or forest.

■ In a hypothesis generation step 81, the hypotheses generation unit 91, from each of the set of images, using the classification engine 92, generates hypotheses for the class and location of objects 2 in the image 1.

■ In an annotation cost computation step 82, a cost computation unit 93, given the hypotheses, computes the expected annotation cost for each of the images.

■ In an image selecting step 83, an image selection unit 94, given the expected annotation costs, selects one of the images for the next annotation step. This can be done in a fully automatic manner, or can involve an interaction with a user.

■ In an image display step 84, a display of a GUI (graphic user interface) device 95, displays the selected image, with the object hypotheses being marked on the image by corresponding boundary shapes. The GUI device 95 can comprise a computer screen as a display, and a pointing device such as a mouse, trackball, pen etc., ... as an input device, or a touch screen as a combined output and input device.

■ In an annotation step 85, the GUI device 95 accepts annotations entered by the user, indicating, in particular, false positives and false negatives. True positives can be indicated by a single action which confirms that all hypotheses are correct, or by confirming each true positive one by one. In one embodiment, the number of actions to be performed by the user is reduced or minimized by allowing the following actions: i) clicking in the area of the boundary shape of a hypothesis generated by the hypothesis generating unit (indicating it to be a false positive); ii) drawing a boundary shape such as a bounding rectangle around a false negative; and iii) clicking on a button indicating that only true positives are shown in the image (possibly after annotation according to i) and ii)).

■ In a branching step 86, the system checks whether all images of the image set have been annotated. If this is the case, then the method terminates at a final step 89, possibly storing the state of the classification engine and/or further metadata, i.e. results of the annotation, such as statistical information on the images and annotated objects 2.

■ If not all images have been annotated, in an update step 87, the classification engine is updated, taking into account the false negatives and false positives indicated by the user. This can be done, e.g. by incremental training of a single decision tree or of a set of decision trees, such as a Hough forest. This step also can involve adapting the detection threshold in order to minimize the annotation cost.

■ In a subsequent step 88, the image that just was annotated is removed from the set of images. The method then continues iteratively with the hypothesis generation step 81

Typical parameters for the method are: *number of patches per node* from 400 to 600. To reduce time, one can reduce the *votes per leaf* that are cast during detection. *Patches per child node before split:* the minimum number of patches for each child that are required to accept a split has an impact on the annotation error. A very small value generates many splits without having enough information and the trees grow too fast. A very large value slows down tree growth and trees are not discriminative enough at the beginning, which increases the annotation cost. For example, this parameter can be set to 20. *Number of tests per node:* The number of randomly generated tests at each node impacts performance. A small number does not optimize the trees for the detection task but many tests increase the risk of overfitting. 8000 tests are a good trade-off. *Tree depth:* The trees require a minimum depth for reasonable performance. Performance gain for trees with depth greater than 15 is small and saturates at 25. *Number of trees in forest:* At least 5 trees are required to achieve a good performance; after 5, the error further decreases at increasing computational cost. *Detection patch subsampling:* Computation time can be reduced by sub-sampling the image patches during detection. Using only 10% of the densely sampled patches does not result in performance loss and 5% is still acceptable though lower values can become problematic.

For active learning, the size of the learning pool becomes relevant, i.e., the set of images randomly drawn from the unannotated images and ranked according to the prediction model. It turns out that at least 10 images should be drawn, whereas larger numbers result only in small changes. Note that simple random selection corresponds to having only one image.

While the invention has been described in present preferred embodiments of the invention, it is distinctly understood that the invention is not limited thereto, but may be otherwise variously embodied and practised within the scope of the claims.

**References**

[1] A. Joshi, F. Porikli and N. Papanikopoulos, Breaking the interactive bottleneck in multi-class classification with active selection and binary feedback. In CVPR, 2010

[2] S. Vijayanarasimhan and K. Grauman, Cost-sensitive active visual category learning, IJCV, 91 (1), 2011

[3] S. Vijayanarasimhan and K. Grauman, Large-scale live active learning: Training object detectors with crawled data and crowds, In CVPR, 2011

[4] C. Vondrick and D. Ramanan, Video annotation and tracking with active learning. In NIPS, 2011

[5] J. Gall, A. Yao, N. Razavi, L. Van Gool and V. Lempitsky, Hough forests for object detection, tracking, and action recognition, In PAMI, 33(11), 2011

[6] L. Breiman, Random Forests, Machine Learning, 45, 2001

[7] S. Schulter, C. Leistner, P. M. Roth, L. Van Gool and H. Bischof, Online Hough Forests, BMVC, 2011

**Claims**

1.  A method for annotating images from a set of still images or from a video stream by automatically identifying **objects** (2) in the images (1) and by visually marking the objects (2) in the images, the method, given a **set of images** showing objects (2) to be identified, performing *for at least a subset* of the set of images the following steps

    ■ *for each image of the subset,* a **hypothesis generating unit** (91) generating (81) one or more **object hypotheses,** wherein an object hypothesis defines a **region** within the image and is associated with an **object class;**
    ■ *for each image of the subset,* computing (82) an estimated **annotation** cost, wherein the annotation cost is a measure of the effort for correcting the object hypotheses in the image (1), for example, by a human user;
    ■ selecting (83) one of the *images of the subset* on the basis of the annotation cost;
    ■ displaying (84) the selected image, including a visual representation (3) of a *subset of the object hypotheses* of the selected image, on a graphical user interface (95);
- in an annotation step (85), accepting user input specifying, for each of the displayed object hypotheses, whether it is a correct or a false hypothesis; and optionally accepting user input specifying objects (2) shown in the image (1) for which no object hypothesis is displayed.

2. The method according to claim 1, comprising the further step of updating (87) the hypothesis generating unit in accordance with the user input.

3. The method according to claim 2, comprising the repeated execution of the steps of

- removing (88) the selected image from the subset, thereby creating a reduced subset; and,
- performing the steps of claim 1 (81, 82, 83, 84, 85) for the reduced subset; until the annotation (85) step has been performed for the last image.

4. The method according to one of claims 2 or 3, wherein the hypothesis generating unit (91) comprises a computer-based implementation of a classification method or device which is designed to classify image data and to be incrementally updated, given annotated image data.

5. The method according to claim 4, wherein the hypothesis generating unit (91) comprises a computer-based implementation of a single decision tree or of a set of decision trees, that is, a decision forest, in particular of a Hough forest.

6. The method according claim 4 or 5, wherein the hypothesis generating unit (91), given image data representing a patch (7) of an image, is designed to return at least an offset vector (8) and a patch score value, wherein the offset vector (8) relates the patch (7) to a fixed point (9) of an object (2), and the patch score value represents a confidence that the patch (7) is part of an instance of a particular object class.

7. The method according to one of the preceding claims, wherein the step of computing (82) an estimated **annotation cost** comprises the steps of

- for each object hypothesis, given an **object score** which represents a confidence that the region (3) of the image associated with the object hypothesis represents an instance (2) of a particular object class, selecting whether to display a visual representation of the object hypothesis, thereby creating a display set of object hypotheses to be displayed and a non-display set of object hypotheses not to be displayed;
- computing, for each member of the display set the probability that it is a false positive, and computing, for each member of the non-display set the probability that it is a false negative;
- computing, from these probabilities, the estimated annotation cost as a function of costs for annotating the image by correcting false positives and correcting false negatives.

8. The method according claim 7 wherein, in the function of costs, correcting one false positive has a different influence than correcting one false negative, in particular a lower influence.

9. The method according claim 7 or 8, wherein in the step of selecting whether to display a visual representation of an object hypothesis, the object score is compared to a threshold value, and, depending on whether the object score is smaller or larger than the threshold value, the object hypothesis is assigned to the display set or the non-display set.

10. The method according claim 9 comprising the step of performing an optimization procedure adapting the threshold value in order to minimize the estimated annotation cost.

11. The method according to one of the preceding claims, wherein the step of selecting one of the *images of the subset* on the basis of the annotation cost comprises the steps of

- displaying, on a user interface (95), a representation of the annotation cost for each of the images of the subset, or for a subset of the images of the subset; and
- inputting a user input indicating the selection of one of the images of the subset.

12. The method according to one of the preceding claims, wherein the step of selecting one of the *images of the subset* on the basis of the annotation cost comprises the steps of

■ for each image of the subset, or for a subset of the images of the subset, evaluating the annotation cost by an evaluation function; and
■ selecting one of the images according to the result of the evaluation function.

13. A computer program for annotating images, loadable into an internal memory of a digital computer, comprising computer program code to make, when said program is loaded in the computer, the computer execute the method according to one of claims 1 to 12.

14. A programmable data processing system (9) for annotating images, programmed to execute the method according to one of claims 1 to 12.

**Fig. 1**

**Fig. 2**

**Fig. 3**

1   2   3

**Fig. 4**

**Fig. 5**

**Fig. 6**

**Fig. 7(a)**

**Fig. 7(b)**

**Fig. 8**

**Fig. 9**

Europäisches
Patentamt

European
Patent Office

Office européen
des brevets

# EUROPEAN SEARCH REPORT

Application Number

EP 12 00 4348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VIJAYANARASIMHAN S ET AL: "What's it going to cost you?: Predicting effort vs. informativeness for multi-label image annotations", COMPUTER VISION AND PATTERN RECOGNITION, 2009. CVPR 2009. IEEE CONFERENCE ON, IEEE, PISCATAWAY, NJ, USA, 20 June 2009 (2009-06-20), pages 2262-2269, XP031607232, ISBN: 978-1-4244-3992-8 * abstract * * page 2262, right-hand column, line 30 - page 2263, left-hand column, line 3; figure 1 * * page 2264, left-hand column, line 24 - line 30 * * page 2264, right-hand column, line 4 - line 12; figure 2 * * page 2264, right-hand column, line 34 - page 2265, left-hand column, line 2 * * page 2265, left-hand column, line 33 - line 40 * * page 2266, left-hand column, line 8 - line 18 * * page 2267, left-hand column, line 6 - line 17 * ----- -/-- | 1-14 | INV. G06F17/30 G06K9/00 |
| | | | TECHNICAL FIELDS SEARCHED (IPC) |
| | | | G06F G06K |

The present search report has been drawn up for all claims

| Place of search | Date of completion of the search | Examiner |
|---|---|---|
| Munich | 13 November 2012 | Deane, Inigo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 12 00 4348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XINXIN GAO ET AL: "An interactive framework for online image annotation", NETWORK INFRASTRUCTURE AND DIGITAL CONTENT, 2009. IC-NIDC 2009. IEEE INTERNATIONAL CONFERENCE ON, IEEE, PISCATAWAY, NJ, USA, 6 November 2009 (2009-11-06), pages 400-404, XP031585912, ISBN: 978-1-4244-4898-2 * page 401, left-hand column, line 16 - line 21 * * page 402, left-hand column, line 13 - line 20 * | 1-14 | |
| Y | MENG WANG ET AL: "Active learning in multimedia annotation and retrieval", ACM TRANSACTIONS ON INTELLIGENT SYSTEMS AND TECHNOLOGY, vol. 2, no. 2, 1 February 2011 (2011-02-01), pages 1-21, XP055043925, ISSN: 2157-6904, DOI: 10.1145/1899412.1899414 * abstract * * page 2, line 3 - line 18; figure 1 * * page 13, line 15 - line 30; figure 6 * * page 15, line 13 - line 15 * | 1-14 | TECHNICAL FIELDS SEARCHED (IPC) |

The present search report has been drawn up for all claims

| Place of search | Date of completion of the search | Examiner |
|---|---|---|
| Munich | 13 November 2012 | Deane, Inigo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. JOSHI ; F. PORIKLI ; N. PAPANIKOPOULOS.** Breaking the interactive bottleneck in multi-class classification with active selection and binary feedback. *CVPR,* 2010
- **S. VIJAYANARASIMHAN ; K. GRAUMAN.** *Cost-sensitive active visual category learning,* 2010, vol. 91 (1
- **S. VIJAYANARASIMHAN ; K. GRAUMAN.** Large-scale live active learning: Training object detectors with crawled data and crowds. *CVPR,* 2011
- **C. VONDRICK ; D. RAMANAN.** Video annotation and tracking with active learning. *NIPS,* 2011
- **J. GALL ; A. YAO ; N. RAZAVI ; L. VAN GOOL ; V. LEMPITSKY.** Hough forests for object detection, tracking, and action recognition. *PAMI,* 2011, vol. 33 (11
- **L. BREIMAN.** *Random Forests, Machine Learning,* 2001, vol. 45
- **S. SCHULTER ; C. LEISTNER ; P. M. ROTH ; L. VAN GOOL ; H. BISCHOF.** Online Hough Forests. *BMVC,* 2011